# EUROPÄISCHE PATENTSCHRIFT

(11) **EP 0 849 904 B1**
(45) Veröffentlichungstag und Bekanntmachung des Hinweises auf die Patenterteilung: **11.02.2004**
(21) Anmeldenummer: 97440134.1
(22) Anmeldetag: 17.12.1997
(51) Int. Cl.: H04J 3/06

(54) **Synchrones digitales Nachrichtenübertragungssystem, Steuerungseinrichtung, Netzelement und zentraler Taktgenerator**
Synchronous digital transmission system, control device, network element and central clock generator
Système de transmission digitale synchrone, unité de régulation, élément de réseau et générateur d'horloge central

(30) Priorität: 20.12.1996 DE 19653261
(43) Veröffentlichungstag der Anmeldung: 24.06.1998
(73) Patentinhaber: ALCATEL, 75008 Paris (FR)
(72) Erfinder: Wolf, Michael, Dr., 74395 Mundelsheim (DE)
(74) Vertreter: Schätzle, Albin, Dipl.-Phys.

(56) Entgegenhaltungen:
- EP-A- 0 723 344
- US-A- 4 939 752

## Beschreibung

Die Erfindung betrifft ein synchrones digitales Nachrichtenübertragungssystem, eine Steuerungseinrichtung für einen Netzknoten eines synchronen digitalen Nachrichtenübertragungssystems, ein Netzelement und einen zentralen Taktgenerator für einen Netzknoten eines synchronen digitalen Nachrichtenübertragungssystems.

Ein synchrones digitales Nachrichtenübertragungssystem ist beispielsweise ein SDH-System oder SONET-System; (SHD=synchrone digitale Hierarchie, SONET=Synchronous Optical Network). Bei der Nachrichtenübertragung in einem solchen Nachrichtenübertragungssystem kommt es wesentlich darauf an, daß alle Netzelemente (z.B. Add/Drop-Multiplexer, Crossconnects oder Leitungsmultiplexer) synchron miteinander arbeiten. Weiterhin schreibt die ITU-Empfehlung G.803 vor, daß ein Netzknoten, der mehrere Netzelemente enthält, von einem einzigen zentralen Taktgenerator des Netzknotens mit einem Referenztakt versorgt werden muß.

Ein Konferenzartikel von Dr. M. Wolf "Synchonization Strategy and Phase Noise Performance in Networks including SDH Transmission Equipment, 8th European Frequency and Time Forum 9.-11.3. 1994, TU München, S. 166 bis 174, beschreibt wie in einem Netzknoten die Synchronisierung der Netzelemente eines solchen synchronen digitalen Nachrichtenübertragungssystems erfolgen kann: Ein Netzelement empfängt an zwei Eingängen Nachrichtensignale, von denen ein Takt abgeleitet wird, der zur Synchronisation verwendet werden kann. Die Genauigkeit der Takte dieser Nachrichtensignale gibt ein darin enthaltener Qualitätsindikator an, im folgenden als SSM bezeichnet (Synchronization Status Message, siehe z.B. ITU-T Empfehlungen G.707, G.708 oder G.709). Eine Auswahleinrichtung in dem Netzelement wählt anhand der SSM einen der Takte als Referenztakt aus und leitet diesen an einen zentralen Taktgenerator des Netzknotens weiter. Dieser zentrale Taktgenerator verteilt den Referenztakt an alle Netzelemente des Netzknotens. Es ist auch beschrieben, daß der zentrale Taktgenerator eine eigenständige Einheit sein kann oder daß der Taktgenerator eines Netzelementes, vorzugsweise der eines Crossconnects, als zentraler Taktgenerator verwendet werden kann. Um die Bildung von Synchronisationsschleifen zu verhindern, d.h. daß zwei Netzelemente sich gegenseitig als Referenztaktquelle nutzen, ist eine zusätzliche SSM definiert: "Do not use for synchronization", im folgenden DNU genannt. Diese soll von einem Netzelement an allen Ausgängen gesendet werden, die mit dem Netzelement, welches als Referenztaktquelle ausgewählt ist, verbunden sind.

Ein Problem, das mit der dargestellten Lösung verbunden ist, liegt darin, daß die Netzelemente des Netzknotens die Herkunft des ausgewählten Referenztaktes nicht kennen, ebensowenig dessen Genauigkeit. Auch der zentrale Taktgenerator kann diese Information nicht liefern, da eine Auswahl des Taktes in der Auswahleinrichtung eines Netzelementes vorgenommen wird. Die Netzelemente können in der SSM als Genauigkeit ihres Referenztaktes also nur die Genauigkeit des zentralen Taktgenerators im freien, unsynchronisierten Betrieb angeben, was in der Regel der in ITU-T G.812 festgelegten Genauigkeit entspricht. Zudem kann die SSM DNU nicht an den Ausgängen gesendet werden, die mit der zur Synchronisierung verwendeten Referenztaktquelle verbunden sind, da diese Referenztaktquelle den Netzelementen nicht bekannt ist. Dies kann zur Bildung von Synchronisationsschleifen führen:

Aus der EP 0 723 344 A2 ist ein synchrones Nachrichtenübertragungssystem bekannt, das aus einzelnen untereinander verbundenen Netzelementen besteht. Die Netzelemente leiten aus von benachbarten Netzelementen empfangenen Nachrichtensignalen Taktsignale ab und wählen anhand eines Qualitätsindikators jeweils eines für lokale Synchronisation aus. Zur Vermeidung von Taktschleifen sind die Schnittstelleneinrichtungen der einzelnen Netzelemente in zwei Klassen eingeteilt. Schnittstelleneinrichtungen einer ersten Klasse werden bei der Auswahl berücksichtigt, während Schnittstellen der zweiten Klasse bei der Auswahl ignoriert werden. Netzknoten, die aus mehreren Netzelementen bestehen sind nicht beschrieben, ebenso wenig wie eine zentrale Auswahl eines Referenztaktes für mehrere Netzelemente durch einen zentralen Taktgenerator.

Aufgabe der Erfindung ist es, ein synchrones digitales Nachrichtenübertragungssystem anzugeben, bei dem die Übertragung eines Qualitätsindikators (SSM) entsprechend der Genauigkeit des in einem Netzknoten verwendeten Referenztaktes ermöglicht wird. Eine andere Aufgabe der Erfindung ist es, eine Steuerungseinrichtung für einen Netzknoten eines solchen Nachrichtenübertragungssystem anzugeben. Weitere Aufgaben der Erfindung sind es, ein Netzelement und einen zentralen Taktgenerator für einen solches Nachrichtenübertragungssystem anzugeben.

Die Aufgabe wird hinsichtlich des Nachrichtenübertragungssystems gelöst durch die Merkmale des Patentanspruches 1, hinsichtlich der Steuerungseinrichtung durch die Merkmale des Patentanspruches 2, hinsichtlich des Netzelementes durch die Merkmale des Patentanspruches 6 und hinsichtlich des zentralen Taktgenerators durch die Merkmale des Patentanspruches 8. Vorteilhafte Ausgestaltungen sind den abhängigen Ansprüchen zu entnehmen.

Ein Vorteil der Erfindung besteht darin, daß die Bildung von Synchronisationsschleifen in einem erfindungsgemäßen synchronen digitalen Nachrichtenübertragungssystem vermieden wird.

Anhand der Figuren 1 bis 4 werden im folgenden Ausführungsbeispiele der Erfindung erläutert. Es zeigen:
- Figur 1: eine Steuerungseinrichtung und einen Netzknoten aus mehreren Netzelementen und einem zentralen Taktgenerator,
- Figur 2: den Netzknoten aus Figur 1 und eine zweiteilige Steuerungseinrichtung,
- Figur 3: ein Netzelement, welches mit einem zentralen Taktgenerator verbunden ist, und
- Figur 4: drei Netzknoten und eine zentrale Steuerungseinrichtung.

Netzelemente in einem synchronen digitalen Nachrichtenübertragungssystem arbeiten synchron miteinander, indem sie ihre eigenen Taktgeber auf einen von einem empfangenen Nachrichtensignal abgeleiteten Takt abstimmen. Da Netzelemente an mehreren Eingängen Nachrichtensignale empfangen, findet eine Auswahl zwischen den mehreren empfangenen Nachrichtensignalen statt, auf welchen Takt der interne Taktgeber abgestimmt wird, d.h. welcher Takt als Referenztakt verwendet wird. Zur Auswahl dient ein in jedem Nachrichtensignal übertragener Qualitätsindikator, wie er beispielsweise in der ITU-T Empfehlung G.707 festgelegt ist. Dieser Qualitätindikator gibt die Genauigkeit des Taktes des jeweiligen Nachrichtensignales an und wird im folgenden als SSM (Synchronization Status Message) bezeichnet.

Erfindungsgemäß findet die Auswahl eines Referenztaktes in einem zentralen Taktgenerator statt, dessen Aufgabe es ist, alle Netzelemente eines Netzknotens mit einem zentralen Referenztakt zu versorgen. Ein anderer wichtiger Punkt der Erfindung ist, daß der zentrale Taktgenerator an eine Steuerungseinrichtung eine Mitteilung über seinen Synchronisationszustand sendet. Die Mitteilung enthält die Genauigkeit des als Referenztakt ausgewählten Taktes und die Herkunft dieses Taktes. Die Steuerungseinrichtung sendet wiederum an alle Netzelemente des Netzknotens Anweisungen, welchen Qualitätsindikator diese an welchem Ausgang zu übermitteln haben.

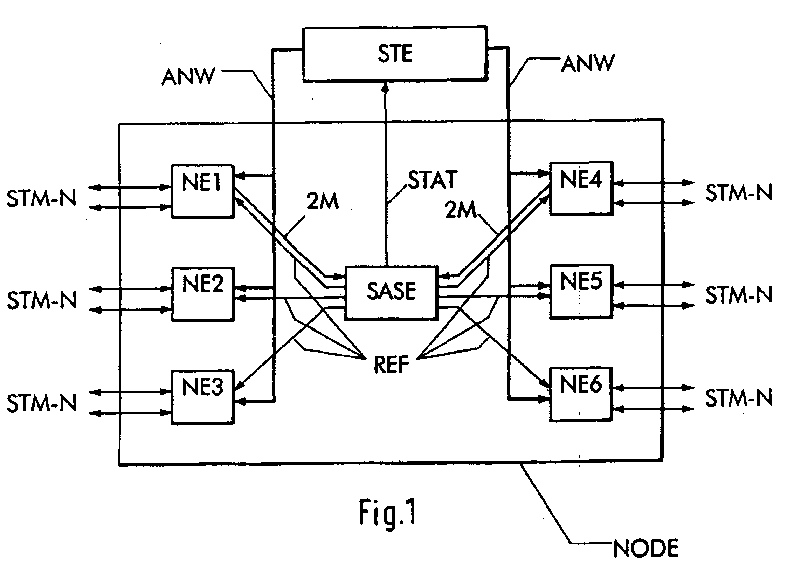

In einem in Figur 1 gezeigten ersten Ausführungsbeispiel enthält ein synchrones digitales Nachrichtenübertragungssystem einen Netzknoten NODE und eine Steuerungseinrichtung STE. Der Netzknoten NODE enthält sechs Netzelemente NE1, ..., NE6, die über ein Übertragungsmedium mit anderen, nicht gezeigten Netzelementen des synchronen digitalen Nachrichtenübertragungssystems verbunden sind und Nachrichtensignale STM-N senden und empfangen. In der Figur 1 ist dies für jedes Netzelement durch zwei Doppelpfeile angedeutet. Dies bedeutet allerdings nicht, daß die sechs Netzelemente NE1, ..., NE6 mit jeweils zwei anderen Netzelementen verbunden sind, sondern deutet an, daß jedes der sechs Netzelemente NE1, ..., NE6 von einem oder mehreren der anderen, nicht gezeigten Netzelemente Nachrichtensignale empfängt und an diese sendet.

Die sechs Netzelemente NE1, ..., NE6 sind mit einem zentralen Taktgenerator SASE verbunden und erhalten von diesem einem Referenztakt REF, auf den jedes Netzelement NE1, ..., NE6 des Netzknotens NODE seinen eigenen Taktgeber abstimmt. Die Netzelemente NE1, ..., NE6 arbeiten dadurch synchron miteinander. Der zentrale Taktgenerator SASE wiederum ist mit Taktsignalausgängen von zwei der Netzelemente NE1, NE4 verbunden und empfängt von diesen Taktsignale 2M. Ein solches Taktsignal 2M enthält einen Takt, den das sendende Netzelement NE1, NE4 von einem empfangenen Nachrichtensignal STM-N abgeleitet hat und zusätzlich einen Qualitätsindikator, der die Genauigkeit des Taktes angibt in dem Nachrichtensignal STM-N enthalten ist.

Im ersten Ausführungsbeispiel handelt es sich bei dem Taktsignal um ein Signal mit einer Übertragungsrate von 2 MBit/s und bei dem Takt um einen Takt mit einer Pulsfolgefrequenz von 2 MHz, der von einem Nachrichtensignal STM-N der Synchronen Digitalen Hierarchie (SDH) abgeleitet ist. In dem Taktsignal wird der Qualitätsindikator (SSM) übertragen, der gemäß der ITU-T Empfehlung G.707 im Rahmen des empfangenen Nachrichtensignales STM-N enthalten ist.

Der zentrale Taktgenerator SASE wählt eines der Taktsignale 2M anhand der Qualitätsindikatoren aus, leitet von dem ausgewählten Taktsignal 2M einen Takt ab und stimmt mit diesem Takt seinen internen Taktgeber ab. Dieser interne Taktgeber stellt die Referenztaktquelle des Netzknotens NODE dar und von ihm wird der Referenztakt für die Netzelemente NE1, ..., NE6 abgegriffen. Im Falle einer Störung, z.B. bei Ausfall bestimmter Nachrichtensignale, von denen die Taktsignale abgeleitet sind, läuft der Taktgeber des zentralen Taktgenerators im freien, unsynchronisierten Betrieb weiter und liefert weiterhin einen Referenztakt REF für den Netzknoten NODE. Die Genauigkeit des Referenztakt im freien, unsynchronisierten Betrieb entspricht dann der Genauigkeit des Taktgebers, was im Ausführungsbeispiel die in ITU-T G.812 festgelegten Genauigkeit ist.

Die Steuerungseinrichtung STE in dem ersten Ausführungsbeispiel ist mit dem zentralen Taktgenerator SASE verbunden und empfängt von diesem eine Mitteilung STAT über dessen Synchronisationszustand. Inhalt dieser Mitteilung ist die Genauigkeit des ausgewählten Taktes gemäß der zugehörigen SSM und die Herkunft des Taktes, d.h. von welchem Netzelement das ausgesuchte Taktsignal empfangen wird und an welchem der Taktsignaleingänge das Taktsignal anliegt. Im ersten Ausführungsbeispiel wird für die Verbindung zwischen zentralem Taktgenerator SASE und Steuerungseinrichtung STE eine X.25-Schnittstelle genutzt.

Die Mitteilung STAT wird von dem zentralen Taktgenerator SASE immer dann gesendet, wenn dieser, beispielsweise aufgrund eines Ausfalles des ausgewählten Taktsignales, ein anderes Taktsignal zum Abgleichen seines Taktgebers auswählt. Die Übermittlung dieser Mitteilung an die Steuerungseinrichtung ist dabei nicht zeitkritisch, da sich eine Veränderung der Genauigkeit des Referenztaktes REF erst nach einem verhältnismäßig langen Zeitraum von einigen Stunden oder Tagen auf das synchrone digitale Nachrichtenübertragungssystem auswirkt. Dies liegt an den vorgeschriebenen hohen Genauigkeiten der empfangenen Takte und der hohen Genauigkeit des Taktgebers im freien, unsynchronisierten Betrieb, die beispielsweise für SDH in den ITU-T Empfehlungen G.811, G.812 und G.813 festgelegt sind. Eine Auswirkung auf das synchrone digitale Nachrichtenübertragungssystem könnte beispielsweise eine Erhöhung der Sliprate sein.

Die Steuerungseinrichtung STE hat eine Verbindung zu den einzelnen Netzelementen NE1, ..., NE6, über die sie Anweisungen ANW an die Netzelemente NE1, ..., NE6 überträgt. In der Figur 1 ist diese durch eine dickere Linie dargestellt, was jedoch nicht bedeutet, daß es sich um eine parallele Verbindung handelt, über die alle Netzelemente dieselbe Anweisung erhalten, sondern jedes Netzelement erhält eine oder mehrere eigene Anweisungen. Diese Informationen können über die existierenden Q-Schnittstellen des Netzwerkmanagementes, die in den ITU-T Empfehlungen Q.811 und Q.812 festgelegt sind, übertragen werden. Die Anweisungen ANW betreffen die SSM, die die Netzelemente NE1, ..., NE6 an ihren einzelnen Ausgängen in den an diesen Ausgängen zu sendenden Nachrichtensignalen STM-N übertragen sollen.

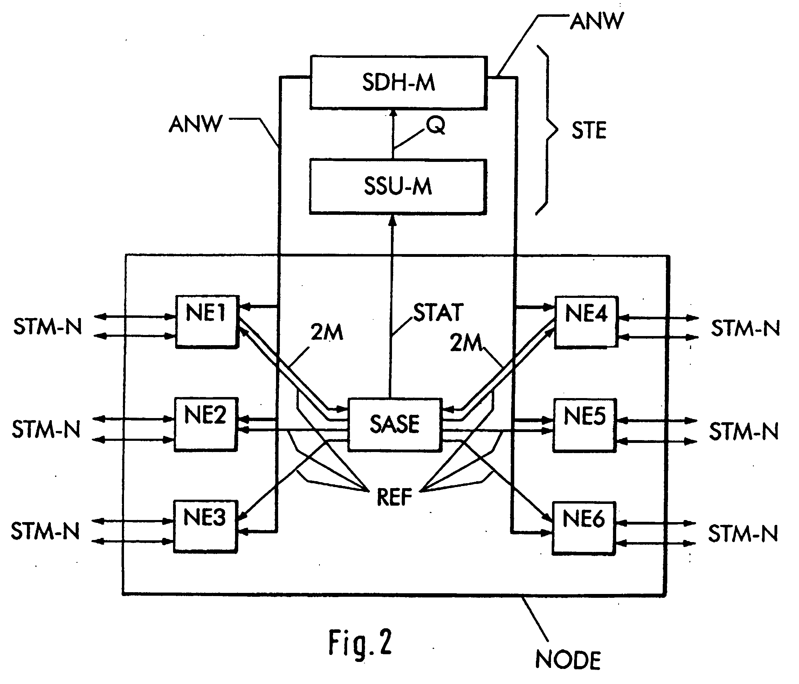

In Figur 2 zeigt ein zweites Ausführungsbeispiel für eine Steuerungseinrichtung STE. Bei dem dargestellten Netzknoten NODE handelt es sich um denselben Netzknoten NODE wie in Figur 1. Die Steuerungseinrichtung STE besteht in diesem zweiten Ausführungsbeispiel aus zwei getrennten Einheiten: einer ersten Steuerungseinheit SSU-M, welche mit dem zentralen Taktgenerator SASE verbunden ist und einer zweiten Steuerungseinheit SDH-M, die mit den Netzelementen NE1, ..., NE6 in Verbindung steht. Untereinander sind die beiden Steuerungseinheiten durch ein Übertragungsmedium Q verbunden. Vorteilhafterweise handelt es sich dabei um eine Q-Schnittestelle. Bei der ersten Steuerungseinheit SSU-M handelt es sich um eine Steuerungseinheit zur Steuerung und Überwachung einer Anzahl von zentralen Taktgeneratoren verschiedener Netzknoten. Die zweite Steuerungseinrichtung dient zur Steuerung und Überwachung von Netzelementen des synchronen digitalen Übertragungssystems.

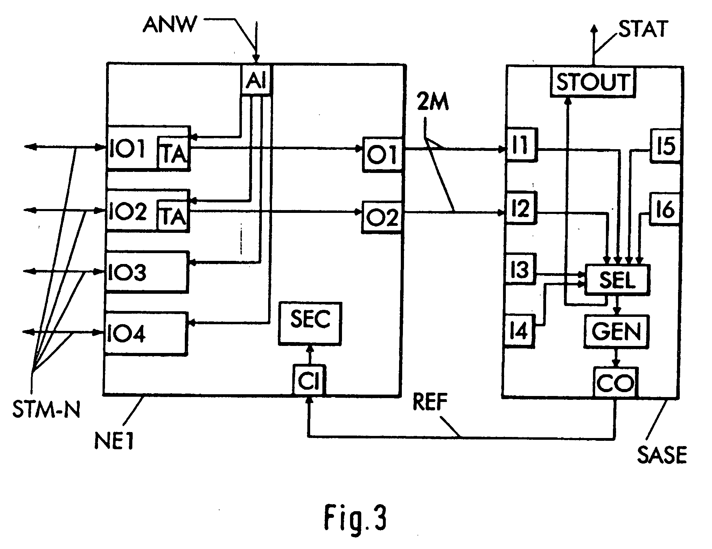

Eines der Netzelemente NE1 und der zentrale Taktgenerator SASE aus den ersten beiden Ausführungsbeispielen ist in Figur 3 detailliert dargestellt. Das Netzelement besitzt in diesem Beispiel vier Anschlußeinheiten IO1, ..., IO4, an denen Nachrichtensignale STM-N von anderen, nicht gezeigten Netzelementen empfangen und an diese gesendet werden. Zweien der Anschlußeinheiten IO1, IO2 ist jeweils eine Taktableitungsschaltung TA zugeordnet, von der aus den empfangenen Nachrichtensignalen STM-N ein Takt abgeleitet.wird. Zudem wird an den zwei Anschlußeinheiten IO1, IO2 die SSM des empfangenen Nachrichtensignales STM-N gelesen. Mit dem abgeleiteten Takt wird ein Taktsignal 2M generiert, welches die SSM enthält. Diese Taktsignale 2M sind an zwei Taktsignalausgängen O1, O2 abgreifbar.

Das Netzelement NE1 verfügt zudem über einen Referenztakteingang, an dem ein Referenztakt REF von dem zentralen Taktgenerator SASE empfangen wird. Der Referenztakt REF wird einem Taktgeber SEC des Netzelementes NE1 zugeleitet, um diesen mit dem Referenztakt REF abzustimmen. An einem weiteren Eingang Al kann das Netzelement NE1 Anweisungen ANW von einer Steuerungseinrichtung empfangen. Die Anweisungen betreffen die SSM, welche von den einzelnen Anschlußeinheiten in den Nachrichtensignalen STM-N gesendet werden sollen.

Der zentrale Taktgenerator hat in dem Ausführungsbeispiel sechs Taktsignaleingänge I1, ..., 16, an denen Taksignale 2M von Netzelementen empfangen werden. In den gezeigten Beispiel sind die zwei Taktsignaleingänge I1, I2 mit den zwei Taktsignalausgängen O1, O2 des Netzelementes NE1 verbunden. Die restlichen Taktsignaleingänge können mit Taktsignalausgängen anderer Netzelemente des Knotens verbunden sein. Die Taktsignaleingänge I1, ..., I6 sind mit einer Auswahleinrichtung SEL verbunden. Diese wertet die in den Taktsignalen enthaltenen SSM aus und wählt anhand der SSM das Taktsignal mit dem genauesten Takt aus. Haben mehrere Taktsignale die gleiche Taktqualität, so kann entweder eine vorgegebene Rangfolge zur Auswahl bestehen, so daß das Taktsignal eines bestimmten Taktsignaleingangs bei gleicher Qualität bevorzugt ausgewählt wird, oder es kann eine zufällige Auswahl getroffen werden.

Von dem ausgewählten Taktsignal wird ein Takt abgeleitet und einem Taktgeber GEN des zentralen Taktgenerators SASE zugeführt, um diesen abzustimmen. Der Taktgeber GEN liefert den Referenztakt REF für alle Netzelemente des Knotens und ist mit einem Referenztaktausgang CO verbunden, an dem der Referenztakt abgreifbar ist. Dieser Referenztaktausgang CO ist mit dem Referenztakteingang Cl des Netzelementes NE1 verbunden.

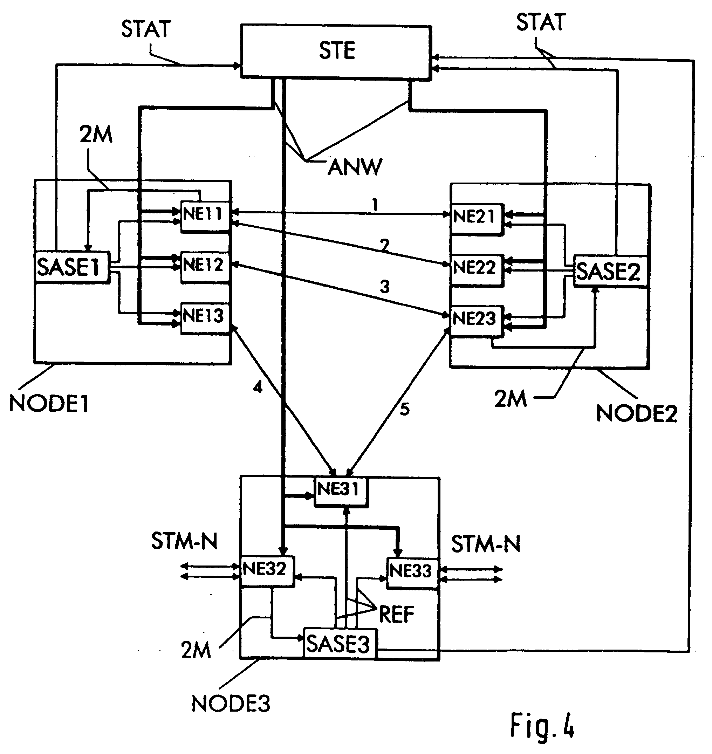

Ein synchrones digitales Nachrichtenübertragungssystem eines dritten, in Figur 4 dargestellten Ausführungsbeispiels enthält drei untereinander verbundenen Netzknoten NODE1, NODE2, NODE3 und eine Steuerungseinrichtung STE. Jeder der drei Netzknoten besteht aus drei Netzelementen NE11, ..., NE13, ..., NE31, ..., NE33 und einem zentralen Taktgenerator SASE1, ..., SASE3. Die Anzahl der Netzelemente in einem Netzknoten jedoch ist nicht auf drei beschränkt. Die Netzelemente eines Netzknotens erhalten über Referenztaktleitungen von dem zentralen Taktgenerators des Netzknotens einen Referenztakt REF. Der zentrale Taktgenerator erhält von den Netzelementen Taktsignale 2M. Von den Verbindungen, über die die zentralen Taktgeneratoren die Taktsignale empfangen, sind nur diejenigen eingezeichnet, die der jeweilige zentrale Taktgenerator zum Abstimmen seines Taktgebers ausgewählt hat.

Die zentralen Taktgeneratoren SASE1, ..., SASE3 sind mit der Steuerungseinrichtung STE verbunden und übertragen an diese Mitteilungen STAT über ihren Synchronisationszustand. Die Steuerungseinrichtung sendet auf Grundlage dieser Mitteilungen Anweisungen ANW an die einzelnen Netzelemente NE11, ..., NE13, ..., NE31, ..., NE33, welche SSM diese an ihren einzelnen Ausgängen senden sollen. In dem Ausführungsbeispiel hat der zentrale Taktgenerator SASE3 des dritten Netzknotens NODE3 ein Taktsignal 2M des Netzelementes NE32 zur Synchronisation seines Taktgebers ausgewählt. Der darin enthaltene Takt stammt von einer nicht gezeigten Quelle, mit der das Netzelement NE32 über Nachrichtenverbindungen STM-N verbunden ist und hat die in der ITU-T Empfehlung G.811 festgelegte Genauigkeit. Der zentrale Taktgenerator SASE3 teilt der Steuerungseinrichtung STE mit, daß er das Taktsignal von Netzelement NE32 für den Referenztakt ausgewählt hat, und daß dieser Takt die Genauigkeit G.811 hat. Die zentrale Steuerung erteilt den Netzelementen daraufhin Anweisungen ANW, welche SSM sie an ihren Ausgängen zu senden haben. In Tabellen 1 ist aufgelistet, welche SSM die Netzelemente an ihren Ausgängen senden.

**Tabelle 1:**

| SSM die von den einzelnen Netzelementen an den verschiedenen Ausgängen gesendet wird. | | |
|---|---|---|
| von: | zu: | SSM |
| NE11 | NE21 | DNU |
| NE21 | NE11 | G.811 |
| NE11 | NE22 | DNU |
| NE22 | NE11 | G.811 |
| NE12 | NE23 | DNU |
| NE23 | NE12 | G.811 |
| NE13 | NE31 | DNU |
| NE31 | NE13 | G.811 |
| NE31 | NE23 | G.811 |
| NE23 | NE31 | DNU |

Der Referenztakt des dritten Netzknotens NODE3 hat die Genauigkeit G.811. Die Netzelemente NE31, ..., NE33 des dritten Netzknotens senden in der SSM daher den Code G.811. Das Netzelement NE23 des zweiten Netzknotens empfängt vom Netzelement NE31 ein Nachrichtensignal mit besagter Taktqualität, leitet davon ein Taktsignal ab und gibt dieses an den zentralen Taktgenerator SASE2 des zweiten Netzknotens weiter. Dieser wählt das Taktsignal als Referenztakt für den zweiten Netzknoten NODE2 aus und verteilt den Takt an die angeschlossenen Netzelemente NE21, ..., NE23. Die Mitteilung an die Steuerungseinheit beinhaltet die Nachricht, daß das zur Synchronisierung des Knotens verwendete Nachrichtensignal von einem bestimmten Eingang des Netzelementes NE23 stammt und daß die Genauigkeit dieses Taktes G.811 ist. Die Steuerungseinrichtung teilt dem Netzelement NE23 nun mit, daß es an das Netzelement NE31 die SSM DNU ("do not use for synchronzation") senden soll, an das Netzelement NE12 jedoch die SSM G.811. Die Netzelemente NE22 und NE21 werden instruiert ebenfalls die SSM G.811 zu senden.

Das Netzelement NE11 des ersten Netzknotens NODE1 empfängt von Netzelement NE21 und von Netzelement NE22 je ein Nachrichtensignal, das die SSM G.811 enthält. Von diesen Nachrichtensignalen leitet es je ein Taktsignal für den zentralen Taktgenerator SASE1 des ersten Netzknotens NODE1 ab. Der zentrale Taktgenerator SASE1 wählt eines dieser Taktsignale aus und teilt die Wahl und die Genauigkeit des gewählten Taktsignales der Steuerungseinrichtung STE mit. Die Steuerungseinrichtung STE instruiert die Netzelemente NE11 und NE12 in Richtung des zweiten Netzknotens die SSM DNU zu senden. Ebenso muß das Netzelement NE13 an das Netzelement NE31 des dritten Netzknotens NODE3 die SSM DNU senden, damit keine Taktschleife entstehen kann, indem der Taktgenerator SASE3 des dritten Netzknotens NODE3 zum Abstimmen seines Taktgebers ein Taktsignal auswählt, welches den Takt des von Netzelement NE13 empfangenen Nachrichtensignales enthält.

Die Steuerungseinrichtung STE ermittelt die Anweisungen ANW auf der Grundlage der Mitteilungen STAT. Dazu können in einem Speicher der Steuerungseinrichtung beispielsweise vorgegebene Tabellen enthalten sein, die für jede mögliche Kombination von Mitteilungen der angeschlossenen zentralen Taktgeneratoren die Anweisungen für die einzelnen Netzelemente enthält. Eine andere Möglichkeit besteht darin, daß die zentrale Steuerung über Informationen über die Konfiguration der angeschlossenen Netzknoten verfügt, d.h. welche Verbindungen zwischen den Netzknoten existieren und an welchen Eingängen der zentralen Taktgeneratoren ein Taktsignal, das von über diese Verbindungen empfangenen Nachrichtensignalen abgeleitet ist, anliegt. Mit Hilfe dieser Informationen kann die zentrale Steuerung bestimmen, welche SSM von den einzelnen Netzelementen gesendet werden muß.

## Patentansprüche

1. Synchrones digitales Nachrichtenübertragungssystem mit mindestens einem Netzknoten (NODE; NODE1, ..., NODE3), der Netzelemente (NE1, ..., NE6; NE11, ..., NE13, NE21, ..., NE33) und einen zentralen Taktgenerator (SASE; SASE1, ..., SASE3) enthält, und mit mindestens einer Steuerungseinrichtung (STE), bei dem
- die Netzelemente mit dem zentralen Taktgenerator verbunden sind und geeignet sind, über diese Verbindung einen Referenztakt (REF) von dem zentralen Taktgenerator zu empfangen,
- der zentralen Taktgenerator mit zumindest einem Teil der Netzelemente (NE1, NE4; NE11, NE23, NE32) verbunden ist und geeignet ist, über diese Verbindungen insgesamt mindestens zwei Taktsignale (2M) zu empfangen, die jeweils einen Takt und einen Qualitätsindikator enthalten, der die Genauigkeit des Referenztaktes angibt,
- der zentrale Taktgenerator mit der Steuerungseinrichtung (STE) verbunden ist und geeignet ist, über diese Verbindung Mitteilungen (STAT) über seinen Synchronisationszustand an die Steuerungseinrichtung zu übertragen, und bei dem
- die Steuerungseinrichtung (STE) mit den Netzelementen verbunden ist und geeignet ist über diese Verbindungen Anweisungen (ANW) an die Netzelemente zu übertragen, wobei die Anweisungen den Netzelementen zu sendende Qualitätsindikatoren angeben.

2. Steuerungseinrichtung (STE) für einen mehrere Netzelemente (NE1, ..., NE6; NE11, ..., NE13, NE21, ..., NE33) und einen zentralen Taktgenerator (SASE; SASE1, ..., SASE3) enthaltenden Netzknoten (NODE; NODE1, ..., NODE3) eines synchronen digitalen Nachrichtenübertragungssystems, **gekennzeichnet durch**
- Mittel zum Empfangen einer Mitteilung (STAT) über den Synchronisationszustand des zentralen Taktgenerators und
- Mittel zum Übertragen von Anweisungen (ANW) an die Netzelemente, wobei die Anweisungen den Netzelementen Qualitätsindikatoren angeben, die von den Netzelementen gesendet werden soll und der für Netzelemente, die nicht dem Netzknoten angehören, zu einer Auswahl eines externen Referenztaktes dient.

3. Steuerungseinrichtung (STE) gemäß Anspruch 2, die für die Steuerung mehrerer Netzknoten vorgesehen ist.

4. Steuerungseinrichtung (STE) gemäß Anspruch 2, die aus einer ersten Steuerungseinheit (SSU-M) und einer zweiten Steuerungseinheit (SDH-M) besteht, die untereinander durch ein Übertragungsmedium (Q) verbunden sind.

5. Steuerungseinrichtung (STE) gemäß Anspruch 2, bei der es sich bei den Mitteln zum Übertragen von Anweisungen (ANW) an die Netzelemente (NE1, ..., NE6) um Mittel zur Informationsübertragung über eine Q-Schnittstelle handelt.

6. Netzelement (NE1) mit einem Taktgeber (SEC), der auf einen Referenztakt (REF) abstimmbar ist, einem Referenztakteingang (Cl), der mit dem Taktgeber (SEC) verbunden ist zum Empfangen des Referenztaktes (REF), und einer Anzahl von Anschlußeinheiten (IO1, ..., IO4) zum Empfangen und Senden von Nachrichtensignalen (STM-N), wobei zumindest einem Teil der Anschlußeinheiten (IO1, IO2) jeweils eine Taktableitungsschaltung (TA) zum Ableiten eines Taktes von dem Nachrichtensignal (STM-N), das an der zugehörigen Anschlußeinheit empfangen wird, zugeordnet ist,
**gekennzeichnet durch**,
- Taktsignalausgänge (O1, O2), die jeweils einer der Anschlußeinheiten (IO1, IO2) mit Taktableitungsschaltung (TA) zugeordnet sind, zum Übertragen von Taktsignalen (2M), die den Takt des in der zugehörigen Anschlußeinheit empfangenen Nachrichtensignales (STM-N) und einen Qualitätsindikator, der die Genauigkeit dieses Taktes angibt, enthalten, und
- einen Eingang (Al) zum Empfangen von Anweisungen (ANW), wobei die Anweisungen (ANW) dem Netzelement (NE1) Qualitätsindikatoren angeben, die von dem Netzelement (NE1) an den einzelnen Anschlußeinheiten (IO1, ..., IO4) zu senden sind.

7. Netzelement (NE1) gemäß Anspruch 6, **dadurch gekennzeichnet, daß** die Taktsignalausgänge (O1, O2) eine 2MBit-Schnittstelle sind, daß der Referenztakteingang (Cl) eine 2MHz-Schnittstelle ist und daß der Eingang (Al) zum Empfangen von Anweisungen (ANW) eine Q-Schnittstelle ist.

8. Zentraler Taktgenerator (SASE; SASE1, ..., SASE3) für einen Netzknoten (NODE; NODE1, ..., NODE3) eines synchronen digitalen Nachrichtenübertragungssystems mit einem Taktgeber (GEN), der auf einen externen Takt abstimmbar ist, und einem Referenztaktausgang (CO), an dem ein Referenztakt (REF) für Netzelemente (NE1, ..., NE6; NE11, ..., NE13, NE21, ..., NE33) des Netzknotens abgreifbar ist, **gekennzeichnet durch**,
- eine Anzahl von Taktsignaleingängen (I1, ..., I6) zum Empfangen von Taktsignalen (2M), die jeweils einen Takt und einen Qualitätsindikator enthalten, der die Genauigkeit des Taktes angibt,
- eine Auswahleinrichtung zum Auswählen des externen Referenztaktes zum Abstimmen des Taktgebers (GEN) anhand der Qualitätsindikatoren,
- einen Ausgang zum Übertragen einer Mitteilung (STAT) über den Synchronisationszustand des zentralen Taktgenerators (SASE) an eine Steuerungseinrichtung (STE).

9. Zentraler Taktgenerator gemäß Anspruch 8, **dadurch gekennzeichnet, daß** es sich bei den Taktsignaleingängen um 2MBit-Schnittstellen handelt und daß der Ausgang zum Übertragen einer Mitteilung (STAT) eine X.25-Schnittstelle ist.

## Claims

1. Synchronous digital message transmission system with at least one network node (NODE; NODE1, ..., NODE3) containing network elements (NE1, ... NE6; NE11, ..., NE13, NE21, ..., NE33) and a central clock generator (SASE; SASE1, ..., SASE3) and with at least one control device (STE) in which
- the network elements are connected to the central clock generator and are suitable for receiving a reference clock (REF) from the central clock generator via this connection,
- the central clock generator is connected to at least part of the network elements (NE1, NE4; NE11, NE23, NE32) and is suitable for receiving via these connections a total of at least two clock signals (2M) which in each case contain a clock and a quality indicator which indicates the precision of the reference clock,
- the central clock generator is connected to the control device (STE) and is suitable for transmitting communications (STAT) on its synchronisation state to the control device via this connection and in which
- the control device (STE) is connected to the network elements and is suitable for transmitting instructions (ANW) to the network elements via these connections, wherein the instructions indicate to the network elements quality indicators to be sent.

2. Control device (STE) for a network node (NODE; NODE1, ..., NODE3) of a synchronous digital message transmission system, containing several network elements (NE1, ..., NE6; NE11, ..., NE13, NE21, ..., NE33) and a central clock generator (SASE; SASE1, ..., SASE3), **characterised by**
- means for receiving a communication (STAT) on the synchronisation state of the central clock generator and
- means for transmitting instructions (ANW) to the network elements, wherein the instructions indicate to the network elements a quality indicator which is to be sent by the network elements and which serves for network elements which do not belong to the network node for selection of an external reference clock.

3. Control device (STE) according to claim 2, provided for the control of several network nodes.

4. Control device (STE) according to claim 2, consisting of a first control unit (SSU-M) and a second control unit (SDH-M) connected to one another by a transmission medium (Q).

5. Control device (STE) according to claim 2, in which the means for transmitting instructions (ANW) to the network elements (NE1, ..., NE6) are means for information transmission via a Q interface.

6. Network element (NE1) with a clock generator (SEC) which can be tuned to a reference clock (REF), a reference clock input (CI) connected to the clock generator (SEC) for receiving the reference clock (REF), and a number of peripheral units (IO1, ..., IO4) for receiving and sending message signals (STM-N), wherein to at least part of the peripheral units (IO1, IO2) is allocated in each case a clock derivation circuit (TA) for deriving a clock from the message signal (STM-N) received at the associated peripheral unit, **characterised by**
- clock signal outputs (01,02) allocated in each case to one of the peripheral units (IO1, IO2) with clock derivation circuit (TA) for transmitting clock signals (2M) containing the clock of the message signal (STM-N) received in the associated peripheral unit and a quality indicator indicating the precision of this clock and
- an input (AI) for receiving instructions (ANW), wherein the instructions (ANW) indicate to the network element (NE1) quality indicators which are to be sent by the network element (NE1) to the individual peripheral units (IO1, ..., IO4).

7. Network element (NE1) according to claim 6, **characterised in that** the clock signal outputs (O1, O2) are a 2Mbit interface, the reference clock input (CI) is a 2MHz interface and the input (AI) for receiving instructions (ANW) is a Q interface.

8. Central clock generator (SASE; SASE1, ..., SASE3) for a network node (NODE; NODE1, ..., NODE3) of a synchronous digital message transmission system with a clock generator (GEN) which can be tuned to an external clock and a reference clock output (CO) at which a reference clock (REF) for network elements (NE1, ..., NE6; NE11, ..., NE13, NE21, ..., NE33) of the network node can be read off, **characterised by**
- a number of clock signal inputs (I1, ..., I6) for receiving clock signals (2M) containing in each case a clock and a quality indicator indicating the precision of the clock,
- a selection device for selecting the external reference clock for tuning the clock generator (GEN) using the quality indicators,
- an output for transmitting a communication (STAT) on the synchronisation state of the central clock generator (SASE) to a control device (STE).

9. Central clock generator according to claim 8, **characterised in that** the clock signal inputs are 2Mbit interfaces and the output for transmitting a communication (STAT) is an X-25 interface.

## Revendications

1. Système de transmission d'information numérique et synchrone avec au moins un noeud de réseau (NODE ; NODE 1, ..., NODE 3), qui contient des éléments de réseau (NE1, ..., NE6 ; NE11, ..., NE13 ; NE21, ..., NE33) et un générateur de rythme central (SASE, SASE1, SASE3), et avec au moins un appareil de commande (STE), sur lequel
- des éléments de réseau sont reliés au générateur de rythme central et sont appropriés pour recevoir un rythme de référence (REF) du générateur de rythme central par cette liaison,
- le générateur de rythme central est relié à au moins une partie des éléments de réseau (NE1, NE4 ; NE11, NE23, NE32) et est approprié pour recevoir au total au moins deux signaux de rythme (2M) au moyen de ces liaisons qui contiennent chacun un rythme et un indicateur de qualité qui indique la précision du rythme de référence,
- le générateur de rythme central est relié à l'appareil de commande (STE) et est approprié pour transmettre par cette liaison des messages (STAT) sur son état de synchronisation à l'appareil de commande, et sur lequel
- l'appareil de commande (STE) est relié aux éléments de réseau et est approprié pour transmettre par ces liaisons des instructions (ANW) aux éléments de réseau, les instructions indiquant des indicateurs de qualité à envoyer aux éléments de réseau.

2. Appareil de commande (STE) pour un noeud de réseau (NODE ; NODE1,..., NODE3), contenant plusieurs éléments de réseau (NE1, ..., NE6 ; NE11, ..., NE13, NE21, ..., NE33) et un générateur de rythme central (SASE ; SASE1, ..., SASE3), d'un système de transmission d'information numérique et synchrone, **caractérisé par**
- des moyens pour recevoir un message (STAT) sur l'état de synchronisation du générateur de rythme central et
- des moyens pour la transmission d'instructions (ANW) aux éléments de réseau, les instructions indiquant aux éléments de réseau des indicateurs de qualité qui doivent être envoyés par les éléments de réseau et qui doivent servir pour des éléments de réseau n'appartenant pas au noeud de réseau à une sélection d'un rythme de référence externe.

3. Appareil de commande (STE) selon la revendication 2, qui est prévu pour la commande de plusieurs noeuds de réseau.

4. Appareil de commande (STE), selon la revendication 2, qui comprend une première unité de commande (SSU-M) et une seconde unité de commande (SDH-M), qui sont reliées entre elles par un support de transmission (Q).

5. Appareil de commande (STE), selon la revendication 2, pour lequel il s'agit en ce qui concerne les moyens pour la transmission d'instructions (ANW) aux éléments de réseau (NE1, ..., NE6) de moyens pour la transmission d'information via une interface Q.

6. Elément de réseau (NE1) avec un rythmeur (SEC), qui peut être adapté à un rythme de référence (REF), une entrée de rythme de référence (CI), qui est reliée au rythmeur (SEC) pour la réception du rythme de référence (REF), et un certain nombre d'unités de raccordement (IO1,. ..., IO4) pour la réception et l'émission de signaux de communication (STM-N), moyennant quoi respectivement un circuit de récupération de rythme (TA) est attribué au moins à une partie des unités de raccordement (IO1, IO2) pour la déduction d'un rythme du signal de communication (STM-N), qui est reçu sur l'unité de raccordement correspondante,
**caractérisé par**
- des sorties de signal de rythme (O1, O2), qui sont attribuées respectivement à l'une des unités de raccordement (IO1, IO2) avec circuit de récupération de rythme (TA), pour la transmission de signaux de rythme (2M) qui contiennent le rythme du signal de communication (STM-N) reçu dans l'unité de raccordement spécifique et un indicateur de qualité qui indique la précision de ce rythme, et
- une entrée (A1) pour la réception d'instructions (ANW), moyennant quoi les instructions (ANW) indiquent à l'élément de réseau (NE1) des indicateurs de qualité qui peuvent être envoyés par l'élément de réseau (NE1) aux différentes unités de raccordement (IO1, ..., IO4).

7. Elément de réseau (NE1) selon la revendication 6, **caractérisé en ce que** les entrées de signal de rythme (O1, O2) sont une interface de 2Mbit, **en ce que** l'entrée de rythme de référence (CI) est une interface de 2MHz et **en ce que** l'entrée (A1) pour la réception d'instructions (ANW) est une interface Q.

8. Générateur de rythme central (SASE, SASE1, ..., SASE3) pour un noeud de réseau (NODE, NODE1, ..., NODE3) un système de transmission d'information numérique et synchrone avec un rythmeur (GEN), qui peut être adapté à un rythme externe, et une sortie de rythme de référence (CO), sur laquelle on peut prélever un rythme de référence (REF) pour des éléments de réseau (NE1, ..., NE6 ; NE11, ..., NE13, ..., NE21, ..., NE33) du noeud de réseau,
**caractérisé par**
- un certain nombre d'entrées de signal de rythme (I1, ..., I6) pour la réception de signaux de rythme (2M) qui contiennent respectivement un rythme et un indicateur de qualité qui indique la précision du rythme,
- un appareil de sélection pour la sélection du rythme de référence externe pour l'adaptation du rythmeur (GEN) à l'aide des indicateurs de qualité,
- une sortie pour la transmission d'un message (STAT) sur l'état de synchronisation du générateur de rythme central (SASE) à un appareil de commande (STE).

9. Générateur de rythme central selon la revendication 8, **caractérisé en ce qu'**il s'agit d'interfaces de 2 MBit en ce qui concerne les entrées de signal de rythme et **en ce que** la sortie pour la transmission d'un message (STAT) est une interface X.25.
